# EUROPÄISCHE PATENTSCHRIFT

(11) **EP 3 024 717 B1**
(45) Veröffentlichungstag und Bekanntmachung des Hinweises auf die Patenterteilung: **02.09.2020**
(21) Anmeldenummer: 14738494.5
(22) Anmeldetag: 10.07.2014
(51) Int. Cl.: B62K 25/24, F16C 11/06, F16C 19/38, F16C 19/50

(54) **SCHWENKLAGER**
SWIVEL BEARING
PALIER PIVOTANT

(30) Priorität: 25.07.2013 DE 102013214582
(43) Veröffentlichungstag der Anmeldung: 01.06.2016
(73) Patentinhaber: Bayerische Motoren Werke Aktiengesellschaft, 80809 München (DE)
(72) Erfinder: SEIDL, Josef, 84130 Dingolfing (DE)
(86) Internationale Anmeldenummer: PCT/EP2014/064814
(87) Internationale Veröffentlichungsnummer: WO 2015/010914

(56) Entgegenhaltungen:
- WO-A1-2007/131590
- DE-A1- 19 633 692
- US-A- 5 571 072
- US-A1- 2006 191 752
- US-A1- 2008 196 790
- US-A1- 2011 012 321

## Beschreibung

Die Erfindung betrifft ein Schwenklager, insbesondere für eine Vorderradaufhängung eines Motorrads. Die Erfindung betrifft ferner eine Vorderradaufhängung für ein Motorrad mit einem solchen Schwenklager.

Unter der Bezeichnung "Duolever" ist eine Vorderradaufhängung für Motorräder von BMW bekannt, die zwei übereinander angeordnete, jeweils schwenkbar am Rahmen oder am Motorgehäuse gelagerte Längslenker aufweist. Die vorderen Enden der Längslenker sind jeweils über ein Kugelgelenk mit einem gabelartigen Radträger verbunden, der - im Gegensatz zur klassischen Bauweise mit jeweils zwei Gleit- und Standrohren - einteilig ausgebildet ist. Die Federung und Dämpfung erfolgt durch ein Federbein, das am unteren der beiden Längslenker angelenkt ist und sich gegen den Rahmen abstützt. Die über den Lenker eingesteuerten Lenkbewegungen werden über ein am Lenkkopf und Radträger gelagertes, trapezförmiges Scherengelenk auf den Radträger übertragen.

Es wurde bereits erkannt, dass Kugelgelenke für den Übergang von Haftreibung in Gleitreibung ein Losbrechmoment überwinden müssen. Bei der zuvor beschriebenen "Duolever"-Vorderradaufhängung betrifft dies das Einfedern des Radträgers und das Lenken aus einer Ruhelage heraus.

Als Lösung für dieses Problem wird in der WO 2007/131590 A1 vorgeschlagen, die vorderen Enden der Längslenker nicht über Kugellager mit dem Radträger zu verbinden, sondern über Schwenklager in Form von Wälzlagern, deren Schwenkachsen quer zur Längsrichtung des Motorrads verlaufen. Diese Schwenklager ermöglichen Federbewegungen des Radträgers relativ zum Rahmen des Motorrads. Der für die Lenkbarkeit des Radträgers benötigte weitere Schwenkfreiheitsgrad wird durch ein Rohr erreicht, das sich zwischen zwei Querverbindungselementen (Gabelbrücken) erstreckt, welche die Gabelholme des Radträgers verbinden. Die Enden des Rohrs sind jeweils über ein Schwenklager mit den Verbindungselementen verbunden. Auch diese beiden Lenklager sind durch Wälzlager gebildet, so dass auch beim Lenken des Radträgers Losbrechmomente weitestgehend vermieden werden.

Die Kombination von mehreren Standard-Wälzlagern zur Darstellung der erforderlichen Freiheitsgrade für die Federung und die Lenkbarkeit des Radträgers gemäß WO 2007/131590 A1 erfordert jedoch einen großen Bauraum. Weitere Nachteile sind das hohe Gewicht und der Montageaufwand.

Eine Vorderradaufhängung für ein Motorrad mit einem Schwenklager gemäß dem Oberbegriff des Anspruchs 1 ist aus der DE 196 33 692 A1 bekannt. Bei dieser Vorderradaufhängung ist eine als starrer Rahmen ausgebildete Gabel vorgesehen, die mittels einer oberen, Lenkbewegungen von einem Steuerkopf auf die Gabel übertragenden Schwinge und mittels einer unteren, die Fahrbelastungen aufnehmenden Schwinge an dem Motorradrahmen gehalten. Die obere Schwinge ist mittels quer zur Fahrtrichtung verlaufenden horizontalen Achsen an dem Steuerkopf und der Gabel angelenkt. Die untere Schwinge ist mittels einer quer zur Fahrtrichtung verlaufenden, horizontalen Achse an dem Motorradrahmen und über ein Gelenk an der Gabel angelenkt, in welchem die Gabel um die Achse des Steuerkopfes verdrehbar und um eine quer zur Fahrtrichtung verlaufende horizontale Achse verschwenkbar ist.

In der US 2006/0191752 A1 ist eine Achsanordnung eines angetriebenen Rades gezeigt, bei der die Enden einer Lagerinnenringwelle nach außen umgebördelt sind.

Aufgabe der Erfindung ist es, die oben genannten Nachteile zu vermeiden und eine kompakte, einfach zu montierende Lagerung mit mehreren Freiheitsgraden zu ermöglichen.

Gelöst wird diese Aufgabe durch ein Schwenklager mit den Merkmalen des Anspruchs 1. Vorteilhafte und zweckmäßige Ausgestaltungen des erfindungsgemäßen Schwenklagers sind in den Unteransprüchen angegeben.

Das erfindungsgemäße Schwenklager, das insbesondere für eine Vorderradaufhängung eines Motorrads vorgesehen ist, umfasst einen ersten Lagerteil, der ein Schwenken eines Bauteils um eine erste Schwenkachse ermöglicht. Das Schwenklager umfasst ferner einen zweiten Lagerteil, der ein Schwenken eines Bauteils um eine zweite Schwenkachse ermöglicht, wobei sich die beiden Schwenkachsen kreuzen. Die beiden Lagerteile sind miteinander verbunden und bilden eine bauliche Einheit. Gemäß der Erfindung ist das zweite Lagerteil bezüglich seiner Erstreckung in Richtung der zweiten Schwenkachse relativ zur ersten Schwenkachse zentriert.

Die Erfindung beruht auf der Erkenntnis, dass ein kombiniertes Schwenklager mit gekreuzten Schwenkachsen alle Bewegungen erlaubt, die bei der Federung und beim Lenken des Radträgers gefordert sind.

Dank der Zusammenfassung der zwei Lagerteile zu einer baulichen Einheit ist das erfindungsgemäße Schwenklager leichter zu handhaben und bietet auch logistische Vorteile hinsichtlich Lagerung und Transport.

Das erfindungsgemäße Schwenklager eignet sich insbesondere für die Vorderradaufhängung eines Motorrads, vor allem für die Lagerung des Radträgers. Es sind grundsätzlich aber auch andere Einsatzmöglichkeiten denkbar, bei denen Schwenkbewegungen mit mehreren Freiheitsgraden gefragt sind.

Gemäß der bevorzugten Ausführungsform der Erfindung weist der erste Lagerteil und/oder der zweite Lagerteil wenigstens ein Wälzlager auf, insbesondere ein Kegelrollenlager. Dadurch werden die wesentlichen Probleme eines Kugelgelenks überwunden. Hervorzuheben sind hierbei das praktisch nicht mehr vorhandene Losbrechmoment (erheblich reduzierte Haft-, aber auch Gleitreibung) und die deutlich geringere Temperaturempfindlichkeit (gerade in Motornähe), die einem Einsatz in Fahrwerk und Lenkung somit nicht mehr entgegenstehen.

Als besonders vorteilhaft erweist sich eine Gestaltung, bei der im ersten Lagerteil und/oder im zweiten Lagerteil zwei gegeneinander angestellte Kegelrollenlager montiert sind, insbesondere in O-Anordnung. Diese Gestaltung ermöglicht es, gleichzeitig wirkende radiale und axiale Belastungen ("kombinierte Belastungen") aufzunehmen.

Die bevorzugte Gestaltung des erfindungsgemäßen Schwenklagers sieht vor, dass der erste Lagerteil ein Lagergehäuse aufweist, in dem ein Zapfen drehbar gelagert ist, und dass der zweite Lagerteil eine äußere Lagerschale aufweist, in der eine Spannbuchse drehbar gelagert ist, wobei die Lagerschale im Zapfen oder durch den Zapfen selbst gebildet ist. Im eingebauten Zustand des Schwenklagers ist das Lagergehäuse fest montiert. Die besondere Gestaltung mit dem im Lagergehäuse drehbaren Zapfen und der im Zapfen wiederum drehbaren Spannbuchse ermöglichen eine leichte und kompakte Ausführung des Schwenklagers mit wenigen Bauteilen, die zudem wenig Bauraum benötigt.

Damit das mit dem erfindungsgemäßen Schwenklager anzulenkende Bauteil möglichst leicht in der Spannbuchse montiert werden kann, ist die Spannbuchse vorzugsweise in einem aus dem Lagergehäuse herausragenden Abschnitt des Zapfens angeordnet und damit problemlos zugänglich.

Gemäß einem vorteilhaften Aspekt der Erfindung ist ein von der Spannbuchse abgewandter, vorzugsweise zylindrischer Abschnitt des Zapfens hohl, und ein freier Rand dieses Abschnitts ist nach außen gebördelt. Die hohle Ausführung des Zapfenabschnitts spart Gewicht und erleichtert das Bördeln des freien Rands. Die Bördelung selbst wird vorteilhaft zur Befestigung eines angrenzenden Lagerbauteils, insbesondere eines Lagerrings, am Zapfen genutzt. Auf Muttern bzw. Schrauben, welche Gewicht, Bauraum und Kosten verursachen und gegen Lösen gesichert werden müssen, kann in diesem Fall verzichtet werden. Die Bördelung bietet somit eine Gewichts-, Kosten- und Bauraumersparnis und erhöht zudem die Funktionssicherheit des erfindungsgemäßen Schwenklagers.

Wie bereits erwähnt kann sich an dem gebördelten Rand des Zapfens ein Lagerring abstützen, der den von der Spannbuchse abgewandten Abschnitt des Zapfens umgibt, wobei der Außendurchmesser des Lagerrings in Richtung des gebördelten Rands vorzugsweise zunimmt. Der Lagerring ist dank der Bördelung sicher am Zapfen gehalten.

Der Lagerring stellt eine vorzugsweise leicht angeschrägte Abrollfläche für erste Wälzkörper des ersten Lagerteils dar, die zwischen dem Lagergehäuse einerseits und dem Lagerring andererseits angeordnet sind.

Eine dazu passende Anordnung eines weiteren Kegelrollenlagers wird durch eine Gestaltung erreicht, bei der der Zapfen einen der Spannbuchse zugewandten Zwischenabschnitt aufweist, dessen Außendurchmesser in Richtung der Spannbuchse vorzugsweise zunimmt, wobei zwischen diesem Zwischenabschnitt und dem Lagergehäuse erste Wälzkörper des ersten Lagerteils angeordnet sind.

Bei einer besonders kompakten Gestaltung des erfindungsgemäßen Schwenklagers weist der Zapfen einen Hohlraum auf, in den die Spannbuchse eingefügt ist, wobei zwischen einer Wandung des Hohlraums und der Spannbuchse zweite Wälzkörper des zweiten Lagerteils angeordnet sind.

Für ein schräg angestelltes zweites Kegelrollenlager liegen die zweiten Wälzkörper auf wenigstens einer Ringfläche der Hohlraumwandung auf, deren Mittelachse parallel zur zweiten Schwenkachse verläuft, wobei die Ringfläche bzw. die Ringflächen relativ zur zweiten Schwenkachse geneigt ist bzw. sind.

Bei der bevorzugten Ausführungsform des Schwenklagers liegen die zweiten Wälzkörper auf wenigstens einem Innenring auf, der drehfest an die Spannbuchse gekoppelt ist. Die Spannbuchse bildet zusammen mit dem Innenring den relativ zur äußeren Lagerschale drehbaren Innenteil eines Wälzlagers.

Gemäß einem besonders vorteilhaften Aspekt der Erfindung ist wenigstens ein freier Rand der Spannbuchse nach außen gebördelt, und an dem einem bzw. beiden gebördelten Rändern der Spannbuchse stützt sich jeweils ein Innenring ab, dessen Außendurchmesser in Richtung des zugehörigen freien Rands der Spannbuchse vorzugsweise zunimmt. Die hohle Spannbuchse ermöglicht in einfacher Weise die Aufnahme eines zu lagernden Bauteils, wobei die Bördelung vorteilhaft zur Befestigung wenigstens eines Innenrings an der Spannbuchse genutzt werden kann. Der Innenring ist dank der Bördelung sicher an der Spannbuchse gehalten. Auf Muttern bzw. Schrauben, welche Gewicht, Bauraum und Kosten verursachen und gegen Lösen gesichert werden müssen, kann in diesem Fall verzichtet werden. Die Bördelung bietet somit eine Gewichts-, Kostenund Bauraumersparnis und erhöht zudem die Funktionssicherheit des erfindungsgemäßen Schwenklagers. Die kegelstumpfartige Form des Innenrings ist für die Ausgestaltung als schräg angestelltes Kegelrollenlager von Bedeutung.

Um eine definierte axiale Vorspannung der zweiten Wälzkörper zu ermöglichen oder wenigstens zu unterstützen, ist gemäß einer Weiterbildung der Erfindung zwischen den beiden Innenringen ein die Spannbuchse umgebender Distanzring angeordnet.

Die Erfindung schafft auch eine Vorderradaufhängung für ein Motorrad, mit einem Radträger und Längs- oder Querlenkern, die den Radträger mit einem tragenden Bauteil des Motorrads, insbesondere einem Motorradrahmen oder einem Motorgehäuse, verbinden. Die Längs- oder Querlenker sind jeweils mit einem Schwenklager der zuvor beschriebenen Art am Radträger angelenkt.

Des Weiteren sieht die Erfindung eine Vorderradaufhängung für ein Motorrad mit einem Radträger in Form einer Teleskopgabel vor. Wenigstens eine Lagerstelle zwischen einem tragenden Bauteil des Motorrads, insbesondere einem Motorradrahmen oder einem Motorgehäuse, und dem Radträger ist durch ein Schwenklager der zuvor beschriebenen Art gebildet.

Bezüglich der Vorteile der erfindungsgemäßen Vorderradaufhängungen wird auf die vorangegangenen Ausführungen zu den Vorteilen des erfindungsgemäßen Schwenklagers verwiesen.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine geschnittene Seitenansicht einer Vorderradaufhängung eines Motorrads nach dem Stand der Technik;
- Figur 2 einen Ausschnitt einer anderen Vorderradaufhängung nach dem Stand der Technik in Seitenansicht;
- Figur 3 eine Schnittansicht entlang der Linie B-B in Figur 2;
- Figur 4 eine perspektivische Ansicht eines erfindungsgemäßen Schwenklagers;
- Figur 5 eine Seitenansicht des Schwenklagers aus Figur 4;
- Figur 6 eine Schnittansicht entlang der Linie C-C in Figur 5; und
- Figur 7 eine der Figur 6 entsprechende Schnittansicht gemäß einer anderen Ausführungsform des erfindungsgemäßen Schwenklagers.

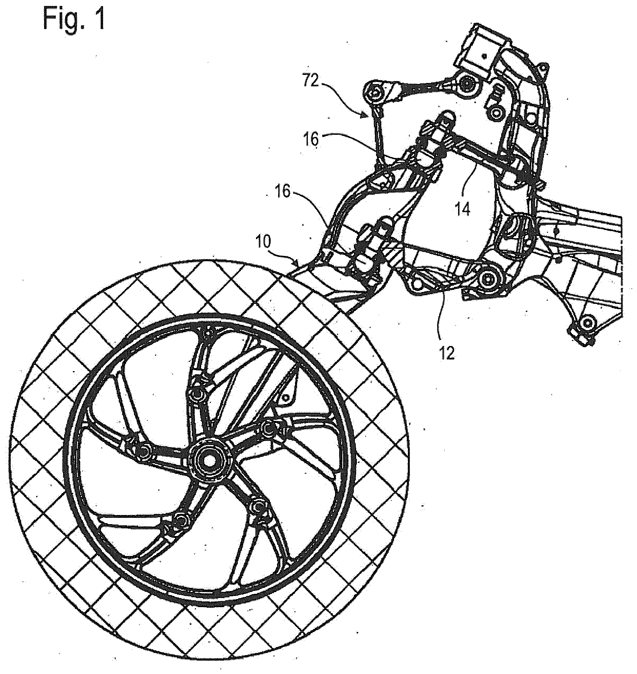

In Figur 1 ist eine bekannte Motorrad-Vorderradaufhängung des Typs "Duolever" dargestellt. Ein Radträger 10, der hier als einteiliger Radträger in Form eines Gussteils mit einem (hier nicht gezeigten) zentralen Federbein zur Federung ausgebildet ist, ist mittels eines unteren Längslenkers 12 und eines oberen Längslenkers 14 am Motorradrahmen und/oder am Motorgehäuse des Motorrads gelagert, wobei die vorderen Enden der Längslenker 12, 14 über Kugelgelenke 16 mit dem Radträger 10 verbunden sind.

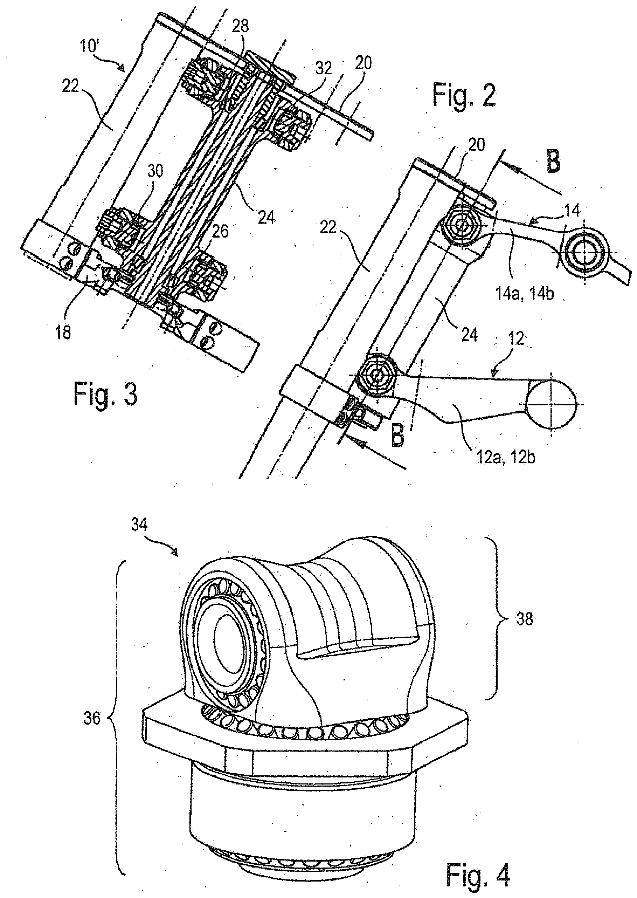

Die in den Figuren 2 und 3 gezeigte Vorderradaufhängung nach dem Stand der Technik weist einen gabelartigen Radträger 10' mit einer unteren Gabelbrücke 18 und einer oberen Gabelbrücke 20 auf, die zwei Gabelarme 22 miteinander verbinden, von denen hier nur der linke gezeigt ist. Der Radträger 10' ist wie bei der zuvor beschriebenen Ausführungsform mittels eines unteren Längslenkers 12 und eines oberen Längslenkers 14 am Motorradrahmen gelagert. Jeder der beiden Längslenker 12, 14 weist einen linken Längslenkerarm 12a bzw. 14a und einen rechten Längslenkerarm 12b bzw. 14b auf, von denen in Figur 2 nur jeweils der linke zu sehen ist.

Zwischen der unteren Gabelbrücke 18 und der oberen Gabelbrücke 20 erstreckt sich ein Steuerrohr 24. Ein unteres Ende des Steuerrohrs 24 ist über ein erstes Wälzlager 26 mit der unteren Gabelbrücke 18 verbunden. Entsprechend ist ein oberes Ende des Steuerrohrs 24 über ein zweites Wälzlager 28 mit der oberen Gabelbrücke 20 verbunden. Die ersten und zweiten Wälzlager 26, 28 sind koaxial angeordnet und dienen als Lenklager. Vordere Enden der Längslenkerarme 12a, 12b bzw. 14a, 14b sind jeweils über ein unteres drittes Wälzlager 30 und ein oberes viertes Wälzlager 32 gelenkig mit dem Steuerrohr verbunden. Die dritten und vierten Wälzlager 30, 32 ermöglichen Federbewegungen des Radträgers 10' in Bezug auf den Rahmen des Motorrads.

Nachfolgend wird nun ein erfindungsgemäßes Schwenklager beschrieben, das jeweils ein Kugelgelenk 16 bzw. jeweils zwei untere Wälzlager 26 und 30 oder zwei obere Wälzlager 28 und 32 bei den zuvor beschriebenen Vorderradaufhängungen ersetzen kann.

Das in den Figuren 4 bis 6 gezeigte Schwenklager 34 ist ein kombiniertes Schwenklager mit einem ersten Lagerteil 36 und einem zweiten Lagerteil 38. Das Schwenklager 34 ist der Einfachheit halber ohne Abdichtung dargestellt.

Der erste Lagerteil 36 umfasst ein Lagergehäuse 40 mit einem im Wesentlichen zylindrischen Gehäuseabschnitt 42 und einem radial vorstehenden Bund 44, die zum festen Einbau des ersten Lagerteils 36 vorgesehen sind.

Im Lagergehäuse 40 ist zentral ein bezüglich seiner Mittelachse M1 im Allgemeinen rotationssymmetrischer Zapfen 46 aufgenommen. Der Zapfen 46 hat einen zylindrischen unteren Abschnitt 48, der in einen sich im Durchmesser kontinuierlich erweiternden Zwischenabschnitt 50 übergeht. An den Zwischenabschnitt 50 schließt sich ein im Wesentlichen wiederum zylindrischer oberer Zapfenabschnitt 52 an.

Der untere Abschnitt 48 des Zapfens 46 weist einen freien Rand 54 auf und kann aus Gewichtsgründen und um ein Umbördeln des freien Randes 54 zu erleichtern, hohl ausgeführt sein. Das untere Ende des Zapfens 46 ist von einem Lagerring 56 umgeben, dessen Außendurchmesser sich nach oben verringert. Damit hat der Lagerring 56 eine kegelstumpfartige Form. Der freie untere Rand 54 des Zapfens 46 ist nach außen gebördelt, sodass der Lagerring 56 fest am Zapfen 46 gehalten wird. Weitere Befestigungsmittel zum Halten des Lagerrings 56 am Zapfen 46 sind an dieser Stelle nicht vorgesehen.

Die Form des Lagergehäuses 40 ist an die Geometrie des Lagerrings 56 und des Zwischenabschnitt 50 des Zapfens 46 angepasst. Zwischen dem Lagerring 56 und dem diesem gegenüberliegenden Lagergehäuseabschnitt sind über den Umfang verteilt mehrere erste Wälzkörper 58 in Form von kegelstumpfförmigen oder zylinderförmigen Rollen angeordnet, ebenso wie zwischen dem Zwischenabschnitt 50 des Zapfens 46 und dem diesem gegenüberliegenden Lagergehäuseabschnitt. Die Rotationsachsen der ersten Wälzkörper 58 sind gegen die Mittelachse M1 des Zapfens 46 geneigt.

Dieser Aufbau des ersten Lagerteils 36 entspricht dem von zwei gegeneinander angestellten Kegelrollenlagern, die in O-Anordnung montiert sind und eine Rotation des Zapfens 46 (einschließlich des Lagerrings 56) relativ zum Lagergehäuse 40 um die Mittelachse M1 des Zapfens 46 ermöglichen. Die Achse M1 stellt somit die Schwenkachse des ersten Lagerteils 36 dar.

Der zweite Lagerteil 38 ist im oberen Zapfenabschnitt 52 gebildet und umfasst eine darin um ihre Mittelachse M2 drehbar gelagerte Spannbuchse 60, die zur Aufnahme eines zu lagernden Bauteils dient. Im oberen Zapfenabschnitt 52 ist hierfür ein Hohlraum vorgesehen, der sich quer zur Achse M1 vollständig durch den oberen Zapfenabschnitt 52 erstreckt. In den Hohlraum ist die Spannbuchse 60 eingefügt, die zusammen mit zwei Innenringen 62 den innenliegenden Teil eines Wälzlagers bildet.

Um die beiden Innenringe 62 fest an der Spannbuchse 60 zu halten sind die Ränder 64 der freien Enden der Spannbuchse 60 nach außen gebördelt. Weitere Befestigungsmittel zum Halten der Innenringe 62 an der Spannbuchse 60 sind an dieser Stelle nicht vorgesehen.

Der Außendurchmesser der beiden axial voneinander beabstandeten Innenringe 62 nimmt von außen nach innen ab, sodass die beiden Innenringe 62, ähnlich wie der Lagerring 56 des ersten Lagerteils 36, eine kegelstumpfartige Form haben.

Der Hohlraum im oberen Zapfenabschnitt 52 hat zwei den Innenringen 62 gegenüberliegende und auf diese abgestimmte Ringflächen 66. Die Mittelachse der Ringflächen 66 ist parallel zur Mittelachse M1 des Zapfens 46, genauer gesagt fällt sie mit dieser zusammen Die Ringflächen 66 sind bezüglich der Achse M2 geneigt, wobei der Abstand der Ringflächen 66 von der Achse M2 in Richtung der gebördelten Ränder 64 der Spannbuchse 60 jeweils zunimmt.

Auf den Innenringen 62 liegen über den Umfang verteilt zweite Wälzkörper 68 in Form von kegelstumpfförmigen oder zylinderförmigen Rollen auf, die sich gegen die Ringflächen 66 des Zapfens 46 abstützen. Die Rotationsachsen der zweiten Wälzkörper 68 sind wiederum gegen die Mittelachse M2 der Spannbuchse 60 geneigt.

Der Aufbau des zweiten Lagerteils 38 entspricht somit ebenfalls dem von zwei gegeneinander angestellten Kegelrollenlagern, die in O-Anordnung montiert sind. Dank der zweiten Wälzkörper 68 kann sich die Spannbuchse 60 (einschließlich der Innenringe 62) relativ zu dem als äußerer Lagerschale dienenden Zapfen 46 des ersten Lagerteils 36 um ihre Mittelachse M2 drehen. Die Achse M2 stellt somit die Schwenkachse des zweiten Lagerteils 38 dar.

Die äußere Lagerschale des zweiten Lagerteils 38 ist durch den Zapfen 46, genauer gesagt durch den oberen Zapfenabschnitt 52, des ersten Lagerteils 36 gebildet, sodass sich eine bauliche Einheit der beiden Lagerteile 36, 38 ergibt.

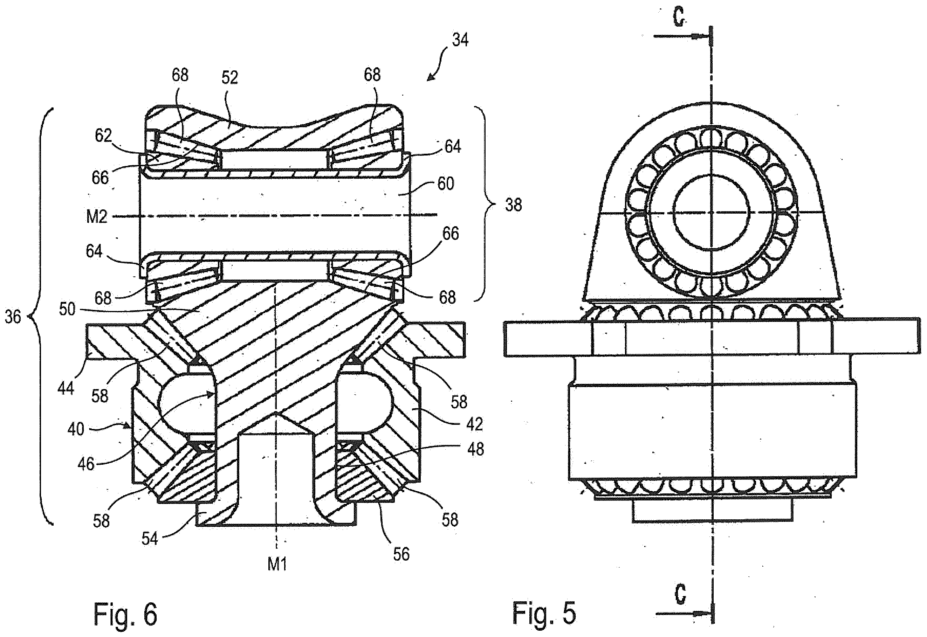

Wie in Figur 6 zu erkennen ist, kreuzen sich die Schwenkachsen M1 und M2 der beiden Lagerteile 36, 38 rechtwinklig.

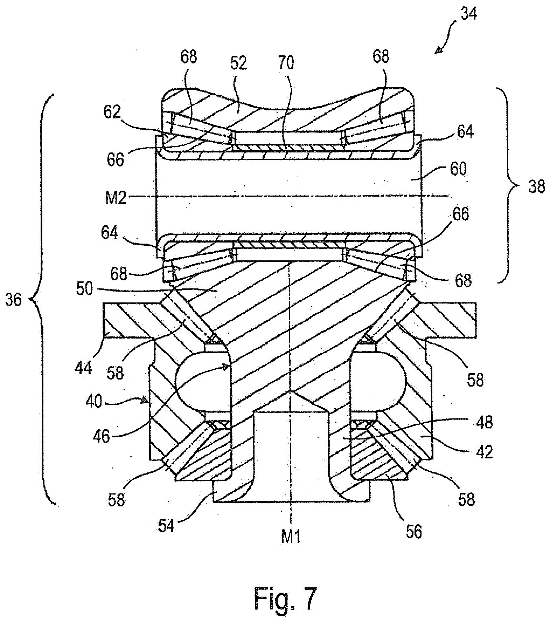

In Figur 7 ist eine Variante des erfindungsgemäßen Schwenklagers 34 gezeigt. Im zweiten Lagerteil 38 ist zwischen den beiden Innenringen 62 ein die Spannbuchse 60 umgebender Distanzring 70 angeordnet. Der Distanzring 70 hält die axiale Vorspannung der zweiten Wälzkörper 68 unabhängig von der Spannkraft der Bördelung und der Spannkraft der Befestigungselemente.

Als Einbauort für das kombinierte Schwenklager 34 ist die Stelle vorgesehen, an der die Kugelgelenke 16 in Figur 1 angeordnet sind, also zwischen Radträger 10 und Längs- bzw. Querlenker 12, 14. Das Schwenklager 34 verbindet somit Radträger 10 und Längs- bzw. Querlenker 12, 14 und erlaubt sowohl Radhub- als auch Lenkbewegungen bei einem einteiligen Radträger, der z. B. in Form eines Gussteils mit einem Federbein ausgebildet ist.

Das kombinierte Schwenklager 34 kann auch bei Zweirädern mit konventioneller Teleskopgabel mit zwei Stand- und zwei Gleitrohren eingesetzt werden. Es ersetzt dann das obere oder untere Lager im Lenkkopf. Damit entfällt die sonst übliche Einstellung der Lenkkopflager.

Das kombinierte Schwenklager 34 kann in gleicher Weise im Lenkgestänge 72 einer Vorderradaufhängung (siehe Figur 1) eingesetzt werden.

Grundsätzlich kann das erfindungsgemäße Schwenklager 34 überall Anwendung finden, wo eine Schwenkbewegung mit mehreren Freiheitsgraden gefordert wird.

### Bezugszeichenliste

- 10, 10': Radträger
- 12: unterer Längslenker
- 12a: linker Längslenkerarm des unteren Längslenkers
- 12b: rechter Längslenkerarm des unteren Längslenkers
- 14: oberer Längslenker
- 14a: linker Längslenkerarm des oberen Längslenkers
- 14b: rechter Längslenkerarm des oberen Längslenkers
- 16: Kugelgelenk
- 18: untere Gabelbrücke
- 20: obere Gabelbrücke
- 22: Gabelarm
- 24: Steuerrohr
- 26: erstes Wälzlager
- 28: zweites Wälzlager
- 30: drittes Wälzlager
- 32: viertes Wälzlager
- 34: Schwenklager
- 36: erster Lagerteil
- 38: zweiter Lagerteil
- 40: Lagergehäuse
- 42: zylindrischer Gehäuseabschnitt
- 44: Bund
- 46: Zapfen
- 48: unterer Zapfenabschnitt
- 50: Zwischenabschnitt
- 52: oberer Zapfenabschnitt
- 54: unterer Rand des Zapfens
- 56: Lagerring
- 58: erste Wälzkörper
- 60: Spannbuchse
- 62: Innenring
- 64: freier Rand der Spannbuchse
- 66: Ringfläche
- 68: zweite Wälzkörper
- 70: Distanzring
- 72: Lenkgestänge

## Patentansprüche

1. Schwenklager (34) für eine Vorderradaufhängung eines Motorrads, mit
einem ersten Lagerteil (36), der ein Schwenken eines Bauteils um eine erste Schwenkachse (M1) ermöglicht, und
einem zweiten Lagerteil (38), der ein Schwenken eines Bauteils um eine zweite Schwenkachse (M2) ermöglicht,
wobei sich die beiden Schwenkachsen (M1, M2) kreuzen, und
wobei die beiden Lagerteile (36, 38) miteinander verbunden sind und eine bauliche Einheit bilden,
**dadurch gekennzeichnet, dass** das zweite Lagerteil (38) bezüglich seiner Erstreckung in Richtung der zweiten Schwenkachse (M2) relativ zur ersten Schwenkachse (M1) zentriert ist.

2. Schwenklager (34) nach Anspruch 1, **dadurch gekennzeichnet, dass** der erste Lagerteil (36) und/oder der zweite Lagerteil (38) wenigstens ein Wälzlager aufweist.

3. Schwenklager (34) nach Anspruch 2, **dadurch gekennzeichnet, dass** im ersten Lagerteil (36) und/oder im zweiten Lagerteil (38) zwei gegeneinander angestellte Kegelrollenlager montiert sind.

4. Schwenklager (34) nach einem der vorhergehenden Ansprüche, **dadurch gekennzeichnet, dass** der erste Lagerteil (36) ein Lagergehäuse (40) aufweist, in dem ein Zapfen (46) drehbar gelagert ist, und dass der zweite Lagerteil (38) eine äußere Lagerschale aufweist, in der eine Spannbuchse (60) drehbar gelagert ist, wobei die Lagerschale im Zapfen (46) oder durch den Zapfen (46) selbst gebildet ist.

5. Schwenklager (34) nach Anspruch 4, **dadurch gekennzeichnet, dass** die Spannbuchse (60) in einem aus dem Lagergehäuse (40) herausragenden Abschnitt (52) des Zapfens (46) angeordnet ist.

6. Schwenklager (34) nach Anspruch 4 oder 5, **dadurch gekennzeichnet, dass** ein von der Spannbuchse (60) abgewandter Abschnitt (48) des Zapfens (46) hohl ist und ein freier Rand (54) dieses Abschnitts (48) nach außen gebördelt ist.

7. Schwenklager (34) nach Anspruch 6, **dadurch gekennzeichnet, dass** sich an dem gebördelten Rand (54) des Zapfens (46) ein Lagerring (56) abstützt, der den von der Spannbuchse (60) abgewandten Abschnitt (48) des Zapfens (46) umgibt.

8. Schwenklager (34) nach Anspruch 7, **dadurch gekennzeichnet, dass** zwischen dem Lagergehäuse (40) und dem Lagerring (56) erste Wälzkörper (58) des ersten Lagerteils (36) angeordnet sind.

9. Schwenklager (34) nach einem der Ansprüche 4 bis 8, **dadurch gekennzeichnet, dass** der Zapfen (46) einen der Spannbuchse (60) zugewandten Zwischenabschnitt (50) aufweist, wobei zwischen diesem Zwischenabschnitt (50) und dem Lagergehäuse (40) erste Wälzkörper (58) des ersten Lagerteils (36) angeordnet sind.

10. Schwenklager (34) nach einem der Ansprüche 4 bis 9, **dadurch gekennzeichnet, dass** der Zapfen (46) einen Hohlraum aufweist, in den die Spannbuchse (60) eingefügt ist, wobei zwischen einer Wandung des Hohlraums und der Spannbuchse (60) zweite Wälzkörper (68) des zweiten Lagerteils (38) angeordnet sind.

11. Schwenklager (34) nach Anspruch 10, **dadurch gekennzeichnet, dass** die zweiten Wälzkörper (68) auf wenigstens einer Ringfläche (66) der Hohlraumwandung aufliegen, deren Mittelachse parallel zur zweiten Schwenkachse (M2) verläuft, wobei die Ringfläche bzw. die Ringflächen (66) relativ zur zweiten Schwenkachse (M2) geneigt ist bzw. sind.

12. Schwenklager (34) nach Anspruch 10 oder 11, **dadurch gekennzeichnet, dass** die zweiten Wälzkörper (68) auf wenigstens einem Innenring (62) aufliegen, der drehfest an die Spannbuchse (60) gekoppelt ist.

13. Schwenklager (34) nach Anspruch 12, **dadurch gekennzeichnet, dass** wenigstens ein freier Rand (64) der Spannbuchse (60) nach außen gebördelt ist und dass sich an dem einem bzw. beiden gebördelten Rändern der Spannbuchse (60) jeweils ein Innenring (62) abstützt.

14. Schwenklager (34) nach Anspruch 13, **dadurch gekennzeichnet, dass** zwischen den beiden Innenringen (62) ein die Spannbuchse (60) umgebender Distanzring (70) angeordnet ist, der eine axiale Vorspannung der zweiten Wälzkörper (68) bewirkt.

15. Vorderradaufhängung für ein Motorrad, mit einem Radträger (10; 10') und Längs- oder Querlenkern (12, 14), die den Radträger (10; 10') mit einem tragenden Bauteil des Motorrads verbinden, **dadurch gekennzeichnet, dass** die Längs- oder Querlenker (12, 14) jeweils mit einem Schwenklager (34) nach einem der Ansprüche 1 bis 14 am Radträger (10; 10') angelenkt sind.

16. Vorderradaufhängung für ein Motorrad, mit einem Radträger (10; 10') in Form einer Teleskopgabel, **dadurch gekennzeichnet, dass** wenigstens eine Lagerstelle zwischen einem tragenden Bauteil des Motorrads und dem Radträger (10; 10') durch ein Schwenklager (34) nach einem Ansprüche 1 bis 14 gebildet ist.

## Claims

1. Pivot bearing (34) for a front wheel suspension system of a motor bike, comprising
a first bearing part (36) which permits a component to pivot about a first pivot axis (M1), and
a second bearing part (38) which permits a component to pivot about a second pivot axis (M2),
wherein the two pivot axes (M1, M2) intersect, and
wherein the two bearing parts (36, 38) are connected to each other and form a structural unit, **characterized in that** the second bearing part (38) is centred with respect to its extent in the direction of the second pivot axis (M2) relative to the first pivot axis (M1).

2. Pivot bearing (34) according to Claim 1, **characterized in that** the first bearing part (36) and/or the second bearing part (38) have/has at least one rolling contact bearing.

3. Pivot bearing (34) according to Claim 2, **characterized in that** two tapered roller bearings which are inclined in relation to each other are mounted in the first bearing part (36) and/or in the second bearing part (38) .

4. Pivot bearing (34) according to one of the preceding claims, **characterized in that** the first bearing part (36) has a bearing housing (40) in which a pin (46) is rotatably mounted, and **in that** the second bearing part (38) has an outer bearing shell in which a clamping bushing (60) is rotatably mounted, wherein the bearing shell is formed in the pin (46) or by the pin (46) itself.

5. Pivot bearing (34) according to Claim 4, **characterized in that** the clamping bushing (60) is arranged in a portion (52) of the pin (46) that protrudes out of the bearing housing (40).

6. Pivot bearing (34) according to Claim 4 or 5, **characterized in that** a portion (48) of the pin (46) facing away from the clamping bushing (60) is hollow, and a free edge (54) of said portion (48) is flanged outwards.

7. Pivot bearing (34) according to Claim 6, **characterized in that** a bearing ring (56) which surrounds that portion (48) of the pin (46) which faces away from the clamping bushing (60) is supported on the flanged edge (54) of the pin (46).

8. Pivot bearing (34) according to Claim 7, **characterized in that** first rolling contact bodies (58) of the first bearing part (36) are arranged between the bearing housing (40) and the bearing ring (56).

9. Pivot bearing (34) according to one of Claims 4 to 8, **characterized in that** the pin (46) has an intermediate portion (50) which faces the clamping bushing (60), wherein first rolling contact bodies (58) of the first bearing part (36) are arranged between said intermediate portion (50) and the bearing housing (40).

10. Pivot bearing (34) according to one of Claims 4 to 9, **characterized in that** the pin (46) has a cavity into which the clamping bushing (60) is fitted, wherein second rolling contact bodies (68) of the second bearing part (38) are arranged between a wall of the cavity and the clamping bushing (60).

11. Pivot bearing (34) according to Claim 10, **characterized in that** the second rolling contact bodies (68) rest on at least one ring surface (66) of the cavity wall, the centre axis of which runs parallel to the second pivot axis (M2), wherein the ring surface or the ring surfaces (66) is or are inclined relative to the second pivot axis (M2).

12. Pivot bearing (34) according to Claim 10 or 11, **characterized in that** the second rolling contact bodies (68) rest on at least one inner ring (62) which is coupled to the clamping bushing (60) for rotation therewith.

13. Pivot bearing (34) according to Claim 12, **characterized in that** at least one free edge (64) of the clamping bushing (60) is flanged outwards, and **in that** a respective inner ring (62) is supported on the one or two flanged edges of the clamping bushing (60).

14. Pivot bearing (34) according to Claim 13, **characterized in that** a spacer ring (70) which surrounds the clamping bushing (60) and brings about an axial prestressing of the second rolling contact bodies (68) is arranged between the two inner rings (62).

15. Front wheel suspension system for a motor bike, comprising a wheel carrier (10; 10') and trailing or transverse links (12, 14) which connect the wheel carrier (10; 10') to a supporting component of the motor bike, **characterized in that** the trailing or transverse links (12, 14) are each coupled by a pivot bearing (34) according to one of Claims 1 to 14 to the wheel carrier (10; 10').

16. Front wheel suspension system for a motor bike, comprising a wheel carrier (10; 10') in the form of a telescopic fork, **characterized in that** at least one bearing point between a supporting component of the motor bike and the wheel carrier (10; 10') is formed by a pivot bearing (34) according to one of Claims 1 to 14.

## Revendications

1. Palier pivotant (34) pour une suspension de roue avant d'une motocyclette, comprenant
une première partie de palier (36) qui permet un pivotement d'un composant autour d'un premier axe de pivotement (M1), et
une deuxième partie de palier (38) qui permet un pivotement d'un composant autour d'un deuxième axe de pivotement (M2),
les deux axes de pivotement (M1, M2) s'intersectant, et
les deux parties de palier (36, 38) étant connectées l'une à l'autre et formant une unité structurelle,
**caractérisé en ce que** la deuxième partie de palier (38) est centrée par rapport à son étendue dans la direction du deuxième axe de pivotement (M2) par rapport au premier axe de pivotement (M1).

2. Palier pivotant (34) selon la revendication 1, **caractérisé en ce que** la première partie de palier (36) et/ou la deuxième partie de palier (38) présentent au moins un palier à roulement.

3. Palier pivotant (34) selon la revendication 2, **caractérisé en ce que** dans la première partie de palier (36) et/ou dans la deuxième partie de palier (38) sont montés deux paliers à rouleaux coniques inclinés l'un par rapport à l'autre.

4. Palier pivotant (34) selon l'une quelconque des revendications précédentes, **caractérisé en ce que** la première partie de palier (36) présente un logement de palier (40) dans lequel un tourillon (46) est supporté de manière rotative et **en ce que** la deuxième partie de palier (38) présente une coque de palier extérieure dans laquelle une douille de serrage (60) est supportée de manière rotative, la coque de palier étant formée dans le tourillon (46) ou par le tourillon (46) lui-même.

5. Palier pivotant (34) selon la revendication 4, **caractérisé en ce que** la douille de serrage (60) est disposée dans une portion (52) du tourillon (46) faisant saillie hors du logement de palier (40) .

6. Palier pivotant (34) selon la revendication 4 ou 5, **caractérisé en ce qu'**une portion (48) du tourillon (46) opposée à la douille de serrage (60) est creuse et un bord libre (54) de cette portion (48) est bordé vers l'extérieur.

7. Palier pivotant (34) selon la revendication 6, **caractérisé en ce qu'**une bague de palier (56) s'appuie contre le bord bordé (54) du tourillon (46), laquelle entoure la portion (48) du tourillon (46) opposée à la douille de serrage (60) .

8. Palier pivotant (34) selon la revendication 7, **caractérisé en ce qu'**entre le logement de palier (40) et la bague de palier (56) sont disposés des premiers corps de roulement (58) de la première partie de palier (36).

9. Palier pivotant (34) selon l'une quelconque des revendications 4 à 8, **caractérisé en ce que** le tourillon (46) présente une portion intermédiaire (50) tournée vers la douille de serrage (60), des premiers corps de roulement (58) de la première partie de palier (36) étant disposés entre cette portion intermédiaire (50) et le logement de palier (40).

10. Palier pivotant (34) selon l'une quelconque des revendications 4 à 9, **caractérisé en ce que** le tourillon (46) présente une cavité dans laquelle est insérée la douille de serrage (60), des deuxièmes corps de roulement (68) de la deuxième partie de palier (38) étant disposés entre une paroi de la cavité et la douille de serrage (60).

11. Palier pivotant (34) selon la revendication 10, **caractérisé en ce que** les deuxièmes corps de roulement (68) reposent sur au moins une surface annulaire (66) de la paroi de la cavité, dont l'axe médian s'étend parallèlement au deuxième axe de pivotement (M2), la surface annulaire ou les surfaces annulaires (66) étant inclinées par rapport au deuxième axe de pivotement (M2).

12. Palier pivotant (34) selon la revendication 10 ou 11, **caractérisé en ce que** les deuxièmes corps de roulement (68) reposent sur au moins une bague intérieure (62) qui est accouplée de manière solidaire en rotation à la douille de serrage (60) .

13. Palier pivotant (34) selon la revendication 12, **caractérisé en ce qu'**au moins un bord libre (64) de la douille de serrage (60) est bordé vers l'extérieur et **en ce qu'**à chaque fois une bague intérieure (62) s'appuie contre un ou contre les deux bords bordés de la douille de serrage (60).

14. Palier pivotant (34) selon la revendication 13, **caractérisé en ce qu'**entre les deux bagues intérieures (62) est disposé une bague d'espacement (70) entourant la douille de serrage (60), laquelle provoque une précontrainte axiale des deux corps de roulement (68).

15. Suspension de roue avant pour une motocyclette, comprenant un support de roue (10 ; 10') et des bras oscillants longitudinaux et/ou transversaux (12, 14) qui relient les supports de roue (10 ; 10) à un composant porteur de la motocyclette, **caractérisée en ce que** les bras oscillants longitudinaux et/ou transversaux (12, 14) sont à chaque fois articulés au support de roue (10 ; 10') par un palier pivotant (34) selon l'une quelconque des revendications 1 à 14.

16. Suspension de roue avant pour une motocyclette, comprenant un support de roue (10 ; 10') sous la forme d'une fourche télescopique, **caractérisée en ce qu'**au moins une zone de palier est formée entre un composant porteur de la motocyclette et le support de roue (10 ; 10') par un palier pivotant (34) selon l'une quelconque des revendications 1 à 14.
